Europäisches Patentamt

European Patent Office

Office européen des brevets

(11) Numéro de publication : **0 384 806 B1**

# (12) FASCICULE DE BREVET EUROPEEN

(45) Date de publication du fascicule du brevet :
16.12.92 Bulletin 92/51

(51) Int. Cl.$^5$ : **B64C 13/04, B64C 13/12**

(21) Numéro de dépôt : **90400390.2**

(22) Date de dépôt : **13.02.90**

(54) **Dispositif de commande à manche basculant, notamment pour aéronef, et système comportant deux tels dispositifs.**

(30) Priorité : **20.02.89 FR 8902191**

(43) Date de publication de la demande :
**29.08.90 Bulletin 90/35**

(45) Mention de la délivrance du brevet :
**16.12.92 Bulletin 92/51**

(84) Etats contractants désignés :
**BE DE ES GB IT NL SE**

(56) Documents cités :
**DE-A- 3 543 326**
**FR-A- 2 245 020**
**GB-A- 2 114 717**
**US-A- 4 477 043**
**US-A- 4 716 399**

(73) Titulaire : **AEROSPATIALE SOCIETE NATIONALE INDUSTRIELLE Société Anonyme dite:**
**37, Boulevard de Montmorency**
**F-75016 Paris (FR)**

(72) Inventeur : **Vauvelle, Bernard**
**3, avenue de la Gare**
**F-31490 Leguevin (FR)**

(74) Mandataire : **Bonnetat, Christian**
**CABINET BONNETAT 23, Rue de Léningrad**
**F-75008 Paris (FR)**

EP 0 384 806 B1

## Description

La présente invention concerne un dispositif de commande pour une machine, pourvu d'un manche de commande basculant et destiné à être actionné par une seule main d'un opérateur.

Quoique non exclusivement, elle s'applique tout particulièrement aux systèmes de pilotage pour aéronef et elle sera ci-après plus spécialement décrite en référence à une telle application, étant bien entendu qu'il ne peut en résulter une limitation de la portée de l'invention.

On sait que de nombreuses machines, telles que avions, hélicoptères, chars d'assaut, engins de travaux publics, etc..., sont pourvues d'un ensemble d'éléments commandés pouvant être actionnés à partir de l'un ou l'autre de deux postes de commande conjugués, contrôlés par deux opérateurs distincts (appelés pilote et copilote dans le cas de véhicules) et équipés chacun d'un organe de commande du type manche, articulé de façon à pouvoir pivoter dans n'importe quelle direction. Ces deux organes de commande sont reliés auxdits organes à commander et sont couplés entre eux de sorte que chacun desdits opérateurs dispose de l'ensemble des commandes desdits organes à commander et que le basculement volontaire par actionnement direct de l'un desdits organes de commande par un opérateur entraîne un basculement induit identique de même sens de l'autre.

Jusqu'à présent, la transmission des ordres de commande entre un manche actionné par un opérateur et un organe à commander s'effectuait de façon mécanique, de sorte que lesdits manches étaient de dimensions relativement importantes et susceptibles de supporter et de transmettre des efforts mécaniques importants. De tels manches étaient donc prévus pour être disposés devant lesdits opérateurs, tenus à deux mains par chaque opérateur et actionnés par action des avant-bras de celui-ci, l'amplitude et l'intensité de leurs mouvements étant conditionnées par les résistances à vaincre pour la manoeuvre des commandes mécaniques.

On remarquera que l'utilisation des deux mains de chaque opérateur non seulement permettait de transmettre des efforts importants, mais encore rendait ces efforts symétriques et identiques pour les deux opérateurs.

Cependant, de plus en plus, les commandes mécaniques sont remplacées par des commandes électriques présentant de nombreux avantages, par exemple en ce qui concerne la masse, l'encombrement, la maintenance, la prise en compte de lois de commande complexes, etc... Il en résulte que lesdits manches sont reliés et associés à des capteurs électriques qui détectent les variations de position desdits manches et qui contrôlent des commandes électriques actionnant lesdits organes commandés en fonction des indications desdits capteurs. Dans ces conditions, lesdits manches ne transmettent que des efforts très faibles et leurs dimensions et leur résistance mécanique peuvent être considérablement diminuées. C'est ainsi que l'on est arrivé à la conception et à l'utilisation de manches de faibles dimensions appelés "minimanches" ou "ministicks", pouvant être tenus et actionnés par une seule main d'un opérateur. Puisque ces minimanches ne transmettent que des efforts insignifiants, il a été nécessaire, afin de permettre auxdits opérateurs de doser les efforts qu'ils appliquent à un minimanche pour le faire basculer et de ramener celui-ci en une position neutre dès qu'il est relâché, d'associer au moins un dispositif de sensation d'effort, par exemple constitué par une bielle à ressort.

En plus des avantages mentionnés ci-dessus concernant l'utilisation des commandes électriques, de tels minimanches permettent de dégager l'espace en avant des opérateurs, afin d'optimiser le regroupement d'autres commandes devant ceux-ci, de sorte que chaque minimanche est disposé latéralement par rapport auxdits opérateurs. De plus, notamment lorsque les deux postes de commande des opérateurs sont parallèles (ce qui est généralement le cas dans un véhicule dans lequel lesdits postes sont disposés face à l'avant de celui-ci), afin de respecter la symétrie de la machine par rapport à un axe passant entre lesdits postes, l'un des minimanches est disposé à gauche de l'opérateur de gauche et l'autre à droite de l'opérateur de droite. Dans un tel cas, l'opérateur de gauche tient donc le minimanche associé de sa main gauche, alors que l'opérateur de droite tient le sien de sa main droite. Le respect de la symétrie de la commande de la machine entraîne donc alors une asymétrie au plan des opérateurs.

On a remarqué qu'une telle asymétrie soulève des difficultés, lorsque la commande de la machine nécessite des basculements des minimanches, latéraux de gauche à droite et inversement par rapport auxdits opérateurs. Ceci provient certainement de la morphologie humaine qui fait que les possibilités d'exercer un effort latéral à l'aide d'une même main fermée sur un minimanche sont différentes selon que la force est exercée en poussant avec la paume vers soi ou en tirant avec les doigts vers l'extérieur. De plus, dans la disposition décrite ci-dessus, à une poussée avec la paume dans l'un des postes de commande correspond une traction avec les doigts dans l'autre poste.

Ainsi, non seulement la poussée et la traction latérales seront ressenties différemment par chaque opérateur, mais encore l'asymétrie d'efforts s'inverse lorsqu'une commande avec la main gauche au poste de gauche est relevée par une commande avec la main droite au poste de droite et vice-versa. Le passage de la commande de la machine d'un poste de commande à l'autre s'effectue donc avec à-coup, ce qui risque d'entraîner des conséquences graves, notamment dans le cas d'un avion.

Pour remédier à ces inconvénients, on a déjà proposé, dans un dispositif complexe de conjugaison mécanique de deux minimanches, d'associer un dispositif de sensation d'effort à chacun desdits organes de commande, de façon que le dispositif de sensation d'effort associé à l'organe de commande actionné par une main gauche soit actif seulement lorsque celui-ci est volontairement et directement actionné par un opérateur de gauche à droite, et que le dispositif de sensation d'effort associé à l'organe de commande actionné par une main droite soit actif seulement lorsque celui-ci est volontairement et directement actionné par un opérateur de droite à gauche.

Un tel dispositif de conjugaison mécanique de deux minimanches, pourvu de dispositifs de sensation d'effort complexes à action sélective, donne satisfaction. Cependant, du fait de sa structure mécanique, il ne peut permettre de tirer le maximum de profit de la réalisation sous forme électrique des commandes de vol. De plus, il présente des jeux et des frottements non négligeables par rapport aux débattements réalisés et aux efforts mis en jeu, et l'inertie des pièces en mouvement est préjudiciable à un fonctionnement correct, de sorte que ses performances, notamment en ce qui concerne la précision de pilotage, ne sont pas aussi bonnes qu'on pourrait l'espérer.

Par ailleurs, pour permettre que, en cas de basculement volontaire d'un manche par un opérateur, un basculement induit identique de même sens soit appliqué à l'autre manche (recopie de position), il est nécessaire, soit de prévoir des moteurs spéciaux, soit de compléter à cet effet le dispositif de conjugaison mécanique entre les deux manches. De toutes façons, de tels moteurs sont nécessaires dans le cas où le véhicule (aéronef) comporte un pilote automatique, afin que la position des minimanches corresponde, à chaque instant, à la commande du pilote automatique.

En outre, il est souvent nécessaire d'associer à chacun desdits manches, pour chacun de leurs axes de basculement, au moins un amortisseur pour parfaire les basculements de ceux-ci, limiter les déplacements trop rapides et éviter des oscillations nuisibles à la commande.

Enfin, afin d'alerter les pilotes d'un aéronef sur une anomalie ou un danger de vol, il est d'usage d'associer auxdits manches des vibreurs, entraînant la vibration de ceux-ci. Ainsi, l'opérateur qui tient un manche avec sa main perçoit ces vibrations et peut prendre les mesures correctives nécessaires.

Ainsi, on voit que les dispositifs de commande à minimanche sont complexes puisqu'ils comprennent des dispositifs de sensation d'effort (bielles à ressort, ressorts à lames, ciseaux, etc...), des amortisseurs (hydrauliques, à membrane, à frottement, etc...), des moyens de motorisation pour la recopie de position en phase de pilotage automatique ou d'un poste de pilotage à un autre, et des vibreurs.

La présente invention a pour objet de remédier à ces inconvénients et de simplifier de tels dispositifs de commande à minimanche en tirant le maximum de profit des commandes de vol électriques et en permettant d'obtenir de meilleures performances et une sécurité de pilotage supérieure. De plus, l'invention permet notamment de supprimer le couplage mécanique entre les manches de deux dispositifs à minimanche associés au pilotage d'une machine et de résoudre les problèmes mentionnés ci-dessus concernant l'inversion des sensations d'efforts d'un poste de pilotage à l'autre.

L'invention permet donc la rationalisation des commandes électriques de vol équipées de minimanches latéraux, dans le pilotage d'aéronefs, ainsi que l'amélioration des conditions de pilotage des aéronefs en assurant sécurité, confort et précision.

A cette fin, selon l'invention, le dispositif pour la commande d'éléments d'une machine, comportant un manche destiné à être actionné par une seule main d'un opérateur et monté basculant autour d'au moins un axe transversal audit manche, ledit manche étant associé à au moins un capteur de position délivrant un signal électrique représentatif du basculement dudit manche autour dudit axe, de part et d'autre d'une position neutre, ledit signal électrique contrôlant au moins l'un desdits éléments de la machine par l'intermédiaire de moyens de calcul, est remarquable en ce qu'il comporte au moins un moteur couple associé audit axe de façon que le basculement dudit manche entraîne une rotation relative entre le rotor et le stator dudit moteur couple et en ce que ledit moteur couple est alimenté par lesdits moyens de calcul.

Lorsque, de façon connue, ledit manche est monté basculant autour d'axes croisés transversaux audit manche, des capteurs de position étant prévus pour délivrer des signaux électriques respectivement représentatifs du basculement dudit manche autour desdits axes, de part et d'autre d'une position neutre, lesdits signaux électriques contrôlant des éléments de ladite machine par l'intermédiaire de moyens de calcul, le dispositif selon l'invention est remarquable en ce qu'il comporte au moins un moteur couple associé à chacun desdits axes, de façon que le basculement dudit manche autour de chacun de ceux-ci entraîne une rotation relative entre le rotor et le stator du moteur couple correspondant et en ce que lesdits moteurs couple sont respectivement alimentés par lesdits moyens de calcul.

Ainsi, lorsque ledit manche est basculé, le capteur de position associé adresse ledit signal électrique aux moyens de calcul qui connaissent donc, à chaque instant, la position dudit manche. Lesdits moyens de calcul peuvent donc adresser au moteur couple correspondant une alimentation appropriée, de sorte que ledit moteur couple engendre un couple résistant au basculement. On obtient alors une sensation d'effort, sans la nécessité de prévoir des dispositifs de sensation d'effort supplémentaires. Grâce à l'invention, on peut donc supprimer les dispositifs de sensation d'effort prévus jusqu'à présent.

On remarquera que le document DE-A-3 543 326 concerne un dispositif de recopie de position entre deux leviers, par l'intermédiaire de deux moteurs pas à pas. Par ailleurs, le brevet US-A-4 477 043 concerne un dispositif de sensation d'effort comportant un moteur faisant varier la force d'un ressort relié à un manche.

Dans le dispositif conforme à l'invention, grâce aux grandes possibilités des moyens de calcul (calculateurs électroniques), il est possible de faire engendrer auxdits moteurs couples toute loi d'effort désirée, en fonction de l'amplitude du basculement dudit manche et/ou de la position à gauche ou à droite dudit manche. Par exemple, la résistance au basculement peut varier, en fonction de ladite amplitude du basculement, de façon linéaire, ou parabolique, ou bien encore présenter des seuils ou des ruptures de pente. Il est également possible d'alimenter les moteurs couple par des signaux permettant de simuler des frottements visqueux. Les amortisseurs prévus par la technique antérieure deviennent donc inutiles.

De plus, on voit que grâce auxdits moteurs couples et à leur commande par lesdits moyens de calcul, il n'y a aucune difficulté à motoriser lesdits manches, soit en vue de la recopie de la position d'un manche par l'autre, soit pour suivre les commandes du pilote automatique. En effet, dans le premier cas, lesdits moyens de calcul, connaissant la position du manche volontairement basculé, peuvent communiquer au manche libre un basculement identique en lui adressant un ordre approprié. Dans le deuxième cas, lesdits moyens de calcul connaissent les ordres aux gouvernes du pilote automatique et peuvent déplacer en conséquence lesdits manches. Ainsi, il est possible de supprimer les moyens de motorisation spéciaux antérieurement prévus, ainsi que tout couplage mécanique entre les manches.

Enfin, on conçoit aisément qu'en cas de danger, lesdits moyens de calcul peuvent adresser auxdits moteurs couple un signal alternatif susceptible de faire vibrer lesdits manches. Les vibreurs antérieurs peuvent donc également être supprimés.

On voit donc que, grâce à l'invention, lesdits moteurs couple servent, à la fois, de dispositifs de sensation d'effort, d'amortisseurs, de moyens de motorisation, de moyens de couplage entre les manches et de vibreurs.

De tels moteurs couple peuvent être de tout type connu. Par exemple, ils peuvent être du type à aimant permanent au samarium-cobalt et être ceux connus commercialement sous les références SM 6028 ZA ou SM 9620 ZA de la société ARTUS.

Bien entendu, le ou les moteurs couple associés à un axe de basculement peuvent être soit montés directement sur ledit axe, soit reliés à celui-ci par une liaison par bielle ou engrenage. Dans ce dernier cas, on peut obtenir une amplification de mouvement.

Par ailleurs, si le dispositif à minimanche est prévu pour que ledit minimanche puisse tourner ou basculer autour d'un axe supplémentaire, il est évident qu'un ou plusieurs moteurs couple peuvent être associés à la rotation ou au basculement dudit minimanche autour dudit axe supplémentaire.

Les figures du dessin annexé feront bien comprendre comment l'invention peut être réalisée. Sur ces figures, des références identiques désignent des éléments semblables.

La figure 1 est une vue partielle en perspective, de l'arrière vers l'avant, d'un poste de pilotage d'avion civil gros porteur équipé de minimanches latéraux.

La figure 2 représente le schéma fonctionnel de l'ensemble d'un minimanche et de ses capteurs, conformément à l'invention.

La figure 3 montre, avec arrachement, un mode de réalisation de l'ensemble du minimanche et de ses capteurs, illustré schématiquement par la figure 2.

La figure 4 donne le schéma synoptique d'un système de commande conforme a l'invention, pourvu de deux minimanches couplés.

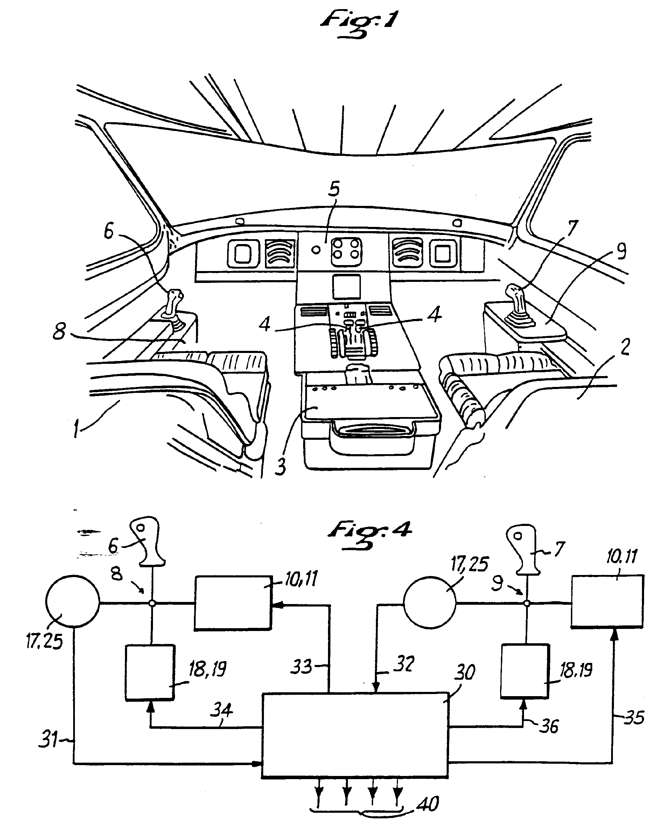

Sur la figure 1, on a représenté schématiquement et partiellement, en vue axiale en perspective de l'arrière vers l'avant, le poste de pilotage d'un avion civil gros porteur moderne, comportant un siège 1 pour un pilote et un siège 2 pour un copilote. De façon usuelle, la place de pilotage destinée au pilote se trouve à gauche, alors que celle du copilote se trouve à droite. Les deux places de pilotage sont séparées l'une de l'autre par une console centrale 3 pourvue d'une pluralité d'organes de commande et de contrôle, tels que des poignées 4 de commande des gaz. Par ailleurs, sur le tableau de bord 5 sont prévus différents organes de contrôle.

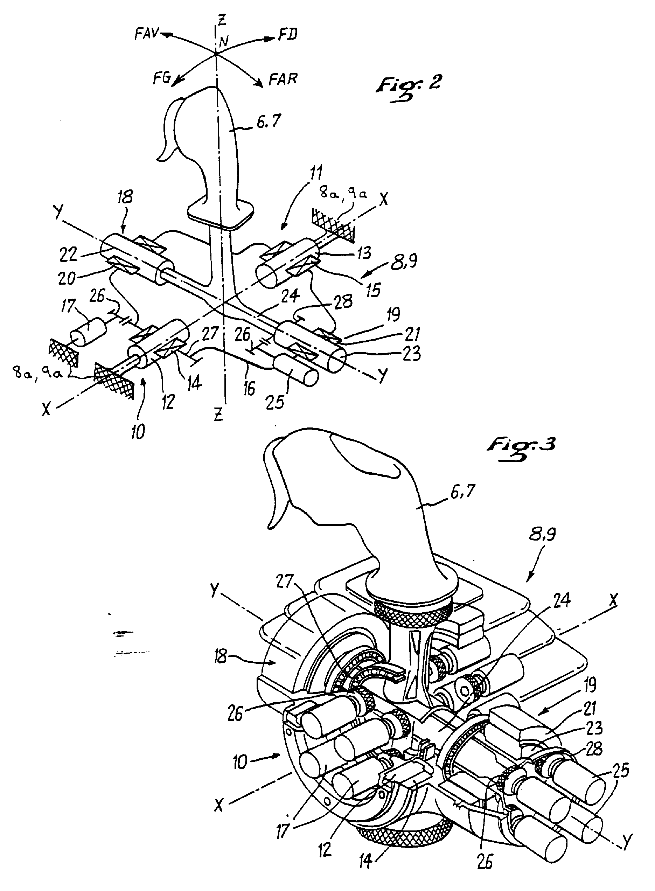

On remarquera que, dans le poste de pilotage représenté sur la figure 1, les deux manches de pilotage usuels se trouvant devant le pilote et le copilote, respectivement, et destinés à être tenus et manoeuvrés à deux mains, ont été supprimés. Ces manches usuels, de grande dimension, ont été remplacés par de simples poignées pivotantes 6 et 7, respectivement disposées à gauche du pilote et à droite du copilote ; ainsi, la poignée 6 est destinée à être actionnée par la main gauche du pilote et la poignée 7 par la main droite du copilote. Par exemple (voir également les figures 2 et 3), l'avion est commandé en profondeur en basculant la poignée 6, ou la poignée 7, parallèlement au plan longitudinal médian de l'avion autour d'un axe transversal X-X et en roulis en basculant l'une desdites poignées latéralement, transversalement audit plan longitudinal médian, autour d'un axe longitudinal Y-Y. Comme on le verra ci-après, chaque poignée peut, à partir d'une position neutre N être basculée vers l'avant (flèche FAV), vers l'arrière (flèche FAR), vers la droite (flèche FD) et vers la gauche (flèche FG).

Les poignées 6 et 7 sont appelées "minimanches" et sont électriquement couplées, pour que l'avion soit pilotable à partir de l'une ou l'autre d'entre elles, ou à partir des deux.

Comme montré par les figures 2 et 3, chaque poignée 6 et 7 est associée à un mécanisme 8 ou 9 respectivement.

Chacun desdits mécanismes 8 ou 9 représentés comporte :

- deux moteurs couple 10 et 11 alignés sur l'axe X-X, dont les rotors 12 et 13 sont fixes par rapport au poste de pilotage (car solidaires du boîtier 8a,9a desdits mécanismes) et dont les stators 14 et 15 sont solidaires d'un équipage basculant 16 ;

- au moins un capteur de position 17, qui est fixe et est susceptible d'indiquer la position de l'équipage basculant 16, autour de l'axe X-X ;

- deux moteurs couple 18 et 19 alignés sur l'axe Y-Y, dont les stators 20 et 21 sont solidaires dudit équipage basculant 16 et dont les rotors 22 et 23 sont solidaires d'un arbre commun 24, de laquelle ladite poignée 6 ou 7 est solidaire ; et

- au moins un capteur de position 25, porté par l'équipage basculant 16 et susceptible d'indiquer la position de la poignée 6,7 autour de l'axe Y-Y.

Les capteurs de position 17 et 25 sont par exemple du type rotatif et leur axe porte un pignon 26 engrènant, respectivement, avec une roue dentée 27 solidaire de l'équipage basculant 16 et concentrique à l'axe X-X et avec une roue dentée 28 solidaire de l'arbre 24 et concentrique à l'axe Y-Y.

Dans le mode de réalisation pratique montré par la figure 3, on a prévu, à des fins de redondance, quatre capteurs 17 et quatre capteurs 25.

Dans le système de commande de vol illustré schématiquement et partiellement sur la figure 4, on a prévu des moyens de calcul 30, par exemple constitués de plusieurs calculateurs. Ces moyens de calcul sont reliés :

- aux capteurs 17 et 25 du mécanisme 8 par des lignes 31 ;

- aux capteurs 17 et 25 du mécanisme 9 par des lignes 32 ;

- aux moteurs couple 10 et 11 du mécanisme 8 par des lignes 33 ;

- aux moteurs couple 18 et 19 du mécanisme 8 par des lignes 34 ;

- aux moteurs couple 10 et 11 du mécanisme 9 par des lignes 35 ;

- aux moteurs couple 18 et 19 du mécanisme 9 par des lignes 36 ; et

- aux gouvernes à commander (non représentées) par des lignes 40.

Lorsque, par exemple, un minimanche 6 ou 7 est volontairement basculé autour de l'axe X-X vers l'avant (flèche FAV) ou vers l'arrière (flèche FAR), il se produit, d'une part, une rotation du ou des capteurs 17 et, d'autre part, une rotation relative entre le stator et le rotor des moteurs couple 10 et 11.

Le signal ainsi engendré par le ou les capteurs 17 est adressé par une ligne 31 aux moyens de calcul 30, qui connaissent donc, à chaque instant, la position dudit minimanche 6 ou 7. Par suite, ils peuvent adresser, aux gouvernes (par exemple de tangage), par l'intermédiaire d'une ligne 40, des ordres de commande, qui correspondent au déplacement dudit minimanche. De plus, par une ligne 33, les moyens de calcul 30 adressent aux moteurs 10 et 11 un signal d'alimentation. Ce signal d'alimentation est une fonction programmée de l'amplitude de la rotation du minimanche 6 ou 7 autour de l'axe X-X. Il produit donc, en sortie desdits moteurs couple, un couple résistant s'opposant à l'action sur le minimanche 6 ou 7. Le pilote actionnant ce minimanche ressent donc une résistance à son action.

De ce qui précède, on comprendra aisément que, grâce aux moteurs couple 18 et 19 et aux moyens de calcul 30, une sensation d'effort peut également être engendrée lorsque le minimanche 6 ou 7 bascule autour de l'axe Y-Y.

Une sensation d'effort désirée en fonction dudit basculement du minimanche 6 ou 7, est obtenue en choisissant en conséquence l'évolution du signal d'alimentation adressé par les moyens de calcul 30 auxdits moteurs couple 10,11,18,19. Cette évolution peut être différente suivant qu'il s'agit du minimanche 6 ou du minimanche 7, afin de prendre en compte la dissymétrie de commande entre le pilote et le copilote.

On peut de plus prévoir l'évolution dudit signal d'alimentation pour que celui-ci simule des caractéristiques d'amortissement visqueux.

Par ailleurs, si seul un minimanche 6 ou 7 est volontairement basculé par un pilote, on conçoit aisément que les moyens de calcul 30, qui connaissent le basculement, peuvent imposer à l'autre minimanche un basculement identique, en commandant de façon appropriée ses moteurs couple 10,11 et/ou 18,19.

Dans le cas où l'aéronef comporte un pilote automatique, celui-ci est, de façon évidente et connue, en liaison avec lesdits moyens de calcul 30. Ainsi, si ledit pilote automatique est enclenché, les moyens de calcul 30 peuvent imposer aux minimanches 6 et 7, par l'intermédiaire de leurs moteurs couple 10,11,18,19, de prendre des positions basculées correspondant à chaque instant aux commandes du pilote automatique.

En outre, en cas de conditions de vol critiques, les moyens de calcul 30 (qui sont en relation avec tous les dispositifs de mesure de bord) peuvent adresser aux moteurs couple 10,11,18,19 des minimanches 6 et 7 une alimentation alternative, destinée à faire vibrer ceux-ci.

Ainsi, grâce à l'invention, on obtient des minimanches simples, complets, précis et de faible masse.

## Revendications

1. Dispositif pour la commande d'éléments d'une machine, comportant un manche (6,7) destiné à être actionné par une seule main d'un opérateur et monté basculant autour d'au moins un axe (X-X) transversal audit manche, ledit manche étant associé à au moins un capteur de position (17) délivrant un signal électrique représentatif du basculement dudit manche autour dudit axe, de part et d'autre d'une position neutre, ledit signal électrique contrôlant au moins l'un desdits éléments de la machine par l'intermédiaire de moyens de calcul (30),
caractérisé en ce qu'il comporte au moins un moteur couple (10,11) associé audit axe (X-X) de façon que le basculement dudit manche (6,7) entraîne une rotation relative entre le rotor et le stator dudit moteur couple et en ce que ledit moteur couple est alimenté par lesdits moyens de calcul (30).

2. Dispositif selon la revendication 1, dans lequel ledit manche (6,7) est monté basculant autour d'axes (X,X-Y,Y) croisés transversaux audit manche, des capteurs de position (17,25) étant prévus pour délivrer des signaux électriques respectivement représentatifs du basculement dudit manche autour desdits axes, de part et d'autre d'une position neutre, lesdits signaux électriques contrôlant des éléments de ladite machine par l'intermédiaire de moyens de calcul (30),
caractérisé en ce qu'il comporte au moins un moteur couple (10,11-18,19) associé à chacun desdits axes, de façon que le basculement dudit manche autour de chacun de ceux-ci entraîne une rotation relative entre le rotor et le stator du moteur couple correspondant et en ce que lesdits moteurs couple sont respectivement alimentés par lesdits moyens de calcul (30).

3. Dispositif selon l'une des revendications 1 ou 2, caractérisé en ce que l'alimentation du ou des moteurs couple par lesdits moyens de calcul (30) est fonction du signal électrique délivré par le capteur de position associé.

4. Dispositif selon l'une des revendications 1 ou 2, caractérisé en ce que l'alimentation du ou des moteurs couple par lesdits moyens de calcul (30) simule un amortissement visqueux.

5. Dispositif selon l'une des revendications 1 ou 2, destiné à être associé à un système de pilotage comportant, outre lesdits moyens de calcul, un pilote automatique, caractérisé en ce que lesdits moyens de calcul alimentent le ou lesdits moteurs couple de façon que la position dudit manche soit en accord avec les ordres donnés par ledit pilote automatique auxdits éléments commandés.

6. Dispositif selon l'une des revendications 1 ou 2, caractérisé en ce que l'alimentation d'un ou des moteurs couple par lesdits moyens de calcul est alternative, de façon à vibrer ledit manche.

7. Système de commande comportant deux dispositifs tels que spécifiés sous les revendications 1 ou 2 et destinés à commander en commun des éléments d'une machine à travers des moyens de calcul communs,
caractérisé en ce que l'alimentation du ou des moteurs couples d'un desdits dispositifs, dont le manche est libre, par l'intermédiaire desdits moyens de calcul est telle que ledit manche libre recopie la position du manche, volontairement actionné, de l'autre desdits dispositifs.

8. Dispositif selon l'une quelconque des revendications 1 à 6,
caractérisé en ce que lesdits moteurs couple sont du type à aimant permanent au samarium-cobalt.

## Patentansprüche

1. Vorrichtung zum Steuern von Elementen einer Maschine, mit einer Griffstange (6, 7) zur einhändigen Betätigung durch den Bediener, die schwenkbar um wenigstens eine zur besagten Griffstange senkrechte Achse (X-X) angebracht ist und die wenigstens einem Positionsmelder (17) zugeordnet ist, der ein elektrisches Signal entsprechend der Verschwenkung der besagten Griffstange beiderseits einer neutralen Position um besagte Achse liefert, wobei besagtes elektrisches Signal wenigstens eines der besagten Elemente der Maschine über Rechnermittel (30) steuert,
dadurch gekennzeichnet, daß die Vorrichtung wenigstens einen der besagten Achse (X-X) zugeordneten Drehmomentmotor (10, 11) aufweist, sodaß die Verschwenkung der besagten Griffstange (6, 7) eine Relativdrehung zwischen dem Rotor und dem Stator des besagten Drehmomentmotors bewirkt, und daß der besagte Drehmomentmotor von besagten Rechnermitteln (30) gespeist wird.

2. Vorrichtung nach Anspruch 1, wobei die besagte Griffstange (6, 7) schwenkbar um gekreuzte Querachsen (X,X - Y,Y) an besagter Griffstange angebracht ist und wobei Positionsmelder (17, 25) zum Liefern von elektrischen Signalen entsprechend der Verschwenkung der besagten Griffstange beiderseits einer neutralen Position um besagte Achsen vorgesehen sind, wobei die besagten elektrischen Signale die Elemente der besagten Maschine über Rechnermittel (30) steuern,
dadurch gekennzeichnet, daß die Vorrichtung wenigstens einen jeder der besagten Achsen zugeordneten Drehmomentmotor (10,11 - 18,19) aufweist, sodaß die Verschwenkung der besagten Griffstange (6, 7) um jede davon eine Relativdrehung zwischen dem Rotor und dem Stator des entsprechenden Drehmomentmotors bewirkt, und daß die besagten Drehmomentmotoren jeweils von besagten Rechnermitteln (30) gespeist werden.

3. Vorrichtung nach einem der Ansprüche 1 oder 2, dadurch gekennzeichnet, daß die Speisung des oder der Drehmomentmotoren durch die besagten Rechnermittel (30) als Funktion des vom zugeordneten Positionsmelder gelieferten elektrischen Signals erfolgt.

4. Vorrichtung nach einem der Ansprüche 1 oder 2, dadurch gekennzeichnet, daß die Speisung des oder der Drehmomentmotoren durch die besagten Rechnermittel (30) eine viskose Dämpfung simuliert.

5. Vorrichtung nach einem der Ansprüche 1 oder 2, zur Zuordnung zu einem Fluglagenregelungssystem mit einem Selbststeuergerät, zusätzlich zu den besagten Rechnermitteln,
dadurch gekennzeichnet, daß die besagten Rechnermittel den oder die Drehmomentmotoren derart speisen, daß die Position der besagten Griffstange in übereinstimmung mit den vom besagten Selbststeuergerät an die besagten gesteuerten Elemente gegebenen Befehlen ist.

6. Vorrichtung nach einem der Ansprüche 1 oder 2, dadurch gekennzeichnet, daß die Speisung des oder der Drehmomentmotoren durch die besagten Rechnermittel abwechselnd erfolgt, sodaß die besagte Griffstange vibriert wird.

7. Steuersystem mit zwei Vorrichtungen nach den Ansprüchen 1 oder 2 zur gemeinsamen Steuerung der Elemente einer Maschine durch gemeinsame Rechnermittel,
dadurch gekennzeichnet, daß die Speisung des oder der Drehmomentmotoren einer der besagten Vorrichtungen, deren Griffstange frei ist, über die besagten Rechnermittel derart erfolgt, daß die besagte freie Griffstange die Position der in vorgesehener Weise betätigten Griffstange der anderen der besagten Vorrichtungen einnimmt.

8. Vorrichtung nach einem der Ansprüche 1 bis 6, dadurch gekennzeichnet, daß die besagten Drehmomentmotoren vom Samarium-Kobalt-Permanentmagnet-Typ sind.

**Claims**

1. Device for the control of elements of a machine, comprising a column (6,7) intended to be actuated by only one hand of an operator and mounted so as to tilt around at least one axis (X-X) which is transversal to the said column, the said column being associated with at least one position sensor (17) delivering an electrical signal representative of the tilting of the said column around the said axis, on either side of a neutral position, the said electrical signal controlling at least one of the said elements of the machine through the use of calculating means (30), characterised in that it comprises at least one torque motor (10,11) associated with the said axis (X-X) in such a way that the tilting of the said column (6,7) gives rise to relative rotation between the rotor and the stator of the said torque motor and in that the said torque motor is supplied by the said calculating means (30).

2. Device according to Claim 1 in which the said column (6,7) is mounted so as to tilt around crossed axes (X,X-Y,Y) transversal to the said column, position sensors (17,25) being provided to deliver electrical signals representative respectively of the tilting of the said column around the said axes, on either side of a neutral position, the said electrical signals controlling elements of the said machine through the use of calculating means (30), characterised in that it comprises at least one torque motor (10,11-18,19) associated with each of the said axes, in such a way that the tilting of the said column around each of the latter gives rise to relative rotation between the rotor and the stator of the corresponding torque motor and in that the said torque motors are respectively supplied by the said calculating means (30).

3. Device according to one of Claims 1 or 2, characterised in that the supply to the torque motor or motors by the said calculating means (30) is a function of the electrical signal delivered by the associated position sensor.

4. Device according to one of Claims 1 or 2, characterised in that the supply to the torque motor or motors by the said calculating means (30) simulates viscous damping.

5. Device according to one of Claims 1 or 2, intended to be associated with a piloting system comprising, in addition to the said calculating means, an automatic pilot, characterised in that the said calculating means supply the torque motor or said motors in such a way that the position of the said column is in accord with the command signals given by the said automatic pilot to the said controlled elements.

6. Device according to one of Claims 1 or 2, characterised in that the supply to the torque motor or motors by the said calculating means is alternating, in such a way as to shake the said column.

7. Control system comprising two devices such as specified under Claims 1 or 2 and intended to control, in common, elements of a machine through common calculating means, characterised in that the supply to the torque motor or motors of one of the said devices, whose column is free, through the use of the said calculating means is such that the said free column copies the position of the column, deliberately actuated, of the other of the said devices.

8. Device according to any one of Claims 1 to 6, characterised in that the said torque motors are of the type with a samarium-cobalt permanent magnet.

Fig.1

Fig.4

Fig. 2

Fig. 3